# EUROPÄISCHE PATENTSCHRIFT

(11) **EP 3 124 803 B1**
(45) Veröffentlichungstag und Bekanntmachung des Hinweises auf die Patenterteilung: **07.08.2019**
(21) Anmeldenummer: 16173030.4
(22) Anmeldetag: 06.06.2016
(51) Int. Cl.: F16B 19/08, B21J 15/02, B21J 15/12

(54) **STANZNIETVORRICHTUNG**
PUNCH RIVET DEVICE
DISPOSITIF DE RIVETAGE

(30) Priorität: 31.07.2015 DE 102015214618
(43) Veröffentlichungstag der Anmeldung: 01.02.2017
(73) Patentinhaber: ROBERT BOSCH GMBH, 70442 Stuttgart (DE)
(72) Erfinder: Engler, Sebastian, 70794 Filderstadt (DE); Woelke, Florian, 71229 Leonberg (DE); Hoerlein, Rainer Heinrich, 70499 Stuttgart (DE); Scharfenberg, Andreas, 71540 Murrhardt (DE); Diessner, Christian, 75417 Muehlacker-Muehlhausen (DE); Pfrommer, Karl-Heinz, 75417 Muehlacker (DE); Kesel, Ingo, 71665 Vaihingen (DE)
(74) Vertreter: Thürer, Andreas

(56) Entgegenhaltungen:
- EP-B1- 2 318 161
- DE-B4- 19 549 819

## Beschreibung

Die vorliegende Erfindung betrifft eine Stanznietworrichtung mit einem Stanznietstempel.

### Stand der Technik

Verfahren zum Stanznieten dienen zum Verbinden mindestens zweier in einem Verbindungsbereich insbesondere eben ausgebildeter Bauteile (Fügepartner). Ein Stanznietverfahren zeichnet sich dadurch aus, dass ein Vorlochen der miteinander zu verbindenden Bauteile nicht erforderlich ist. Vielmehr wird ein Stanzniet mittels eines Stempels oder eines Stempelwerkzeugs in die wenigstens zwei Bauteile eingedrückt, wobei durch einen entsprechend geformten Gegenhalter, bspw. in Form einer Matrize, der mit dem Stempelwerkzeug zusammenwirkt, sichergestellt ist, dass der Niet oder die Bauteile sich in einer bestimmten Art und Weise verformen, um eine kraft- und formschlüssige Verbindung zwischen den Bauteilen herzustellen.

Beim Stanznieten soll der Niet vor der Vernietung im Setzwerkzeug ausgerichtet, insbesondere zentriert sein und sich nicht unbeabsichtigt lösen. Der Niet kann beispielsweise durch flexible Fasern bzw. "Finger" geführt und somit zentriert und gehalten werden. Auch federbelastete (vgl. WO 2012/046002 A2) oder elasto- oder polymere Zentrierungs- und Halteelemente können zum Einsatz kommen. Auch kann der Niet mittels eines Nietschiebers gegen ein Gegenlager gedrückt und so gehalten werden.

Weiterhin sind bspw. aus der EP 2 318 161 B1 oder der DE 10 2014 203 757 A1 sog. Ultraschall-Stanznietverfahren bekannt, bei denen ein Schwingungserzeuger, wie bspw. ein Ultraschall-Generator verwendet wird, um ein oder mehrere Komponenten beim Verbinden der Bauteile in Schwingung zu versetzen. Durch diese Schwingung wird bspw. die aufzuwendende Kraft zum Eindrücken des Niets reduziert.

Aus der DE 195 49 819 B4 ist eine herkömmliche Stanznietvorrichtung bekannt, bei der am Stanznietstempel und am Niet korrespondierende Ausrichtmittel vorgesehen sind und bei der der Niet durch Unterdruck in einem Unterdruckkanal im Stempel gehalten werden kann.

Eine Berührung zwischen Niet und Halterung kann beim vibrationsunterstützten Stanznieten auf Grund der überlagerten (Ultraschall-)Schwingung zu Verschweißungen zwischen Niet und Halterung führen. Es ist daher wünschenswert, eine Ausricht- und Haltemöglichkeit für Stanznietvorrichtung mit Vibrationsunterstützung zur Verfügung zu haben, bei denen der Niet keine nicht-schwingenden Bauteile und vorzugweise nur den Stempel berührt.

### Offenbarung der Erfindung

Erfindungsgemäß wird eine Stanznietvorrichtung mit einem Stanznietstempel mit den Merkmalen des Patentanspruchs 1 vorgeschlagen. Vorteilhafte Ausgestaltungen sind Gegenstand der Unteransprüche sowie der nachfolgenden Beschreibung.

Ein Stanzniet zur Verwendung mit einer erfindungsgemäßen Stanznietvorrichtung hat ein nietseitiges Ausrichtmittel an seinem Nietkopf, welches mit einem entsprechenden stempelseitigen Ausrichtmittel des Stanznietstempels zusammenwirken kann, um so den Stanzniet relativ zum Stanznietstempel auszurichten, insbesondere zu zentrieren. Eines der Ausrichtmittel ist als Ausrichtausnehmung und das andere ist als Ausrichterhebung ausgebildet. Zum Ausrichten greift die Ausrichterhebung in die Ausrichtausnehmung ein. Somit wird auf einfache Weise eine zuverlässige und genaue Ausricht- und Haltemöglichkeit für Stanznietvorrichtungen, z.B. Zangen, mit Ultraschallunterstützung zur Verfügung gestellt, wobei der Stanzniet keine nicht-schwingenden Bauteile und vorzugweise nur den Stempel berührt. Dies verhindert ungewollte Verschweißungen und reduziert Verschleiß.

Die Erfindung ist für Stanznietvorrichtungen mit Vibrationseinrichtung vorgesehen, um dort ein ungewolltes Verrutschen des Niets zu verhindern. Solche Stanznietvorrichtungen haben besondere Vorteile im automobilen Karosserieleichtbau, da das Vibrations- bzw. Ultraschallstanznieten mit der entsprechend ausgelegten Anlagentechnik viele Fügeaufgaben im Bereich Materialmischbau erleichtert und neue Materialdickenkombinationen ermöglicht. Jedoch kann eine Stanznietvorrichtung mit Vibrationsunterstützung auch in anderen Bereichen und/oder zum Fügen anderer Materialein vorteilhaft verwendet werden. Mittels Vibrationen beim Stanznieten werden die für den Nietprozess erforderlichen, i.d.R. sehr hohen, Prozesskräfte erheblich reduziert. Daraus resultieren vor allem Prozessvorteile, wie beispielsweise die Verbesserung des Schnittprozess bzw. der Materialtrennung beim Stanzen, die Veränderung, des plastischen Formänderungsvermögens von Werkstoff (wie z.B. Al/Mg-Blech oder -Druckguss), wodurch das stanznietbare Materialspektrum erweitert werden kann.

Gehalten wird der ausgerichtete Niet am Stempel mittels Kraftschluss. Dazu wird erfindungsgemäß Unterdruckkraft verwendet. Eine Unterdruckkraft dient dazu, den Niet an den Stempel anzusaugen. Zum Ansaugen des Stanzniets an den Stempel kann eine herkömmliche Unterdruckquelle wie z.B. eine Pumpe eingesetzt werden. Der Stempel weist in diesem Fall einen Fluidkanal auf.

Das nietseitige Ausrichtmittel ist zweckmäßigerweise rotationssymmetrisch, so dass der Niet in jeder beliebigen Lage zentriert und geführt werden kann. Das nietseitige Ausrichtmittel kann z.B. eine kegelförmige, kegelstumpfförmige, zylinderförmige oder kreisringförmige Vertiefung oder Erhebung sein.

Das nietseitige Ausrichtmittel kann zweckmäßigerweise auch achsen- oder punktsymmetrisch sein, so dass einem beispielsweise nicht rotationssymmetrischen Niet eine Vorzugsausrichtung vorgebbar ist. Das nietseitige Ausrichtmittel kann z.B. eine pyramidenförmige, pyramidenstumpfförmige oder quaderförmige Vertiefung oder Erhebung sein.

Zweckmäßigerweise sind das nietseitige Ausrichtmittel und das stempelseitige Ausrichtmittel kongruent.

Vorzugsweise ist die Vibrationseinrichtung als Ultraschallsystem ausgebildet und weist insbesondere einen Ultraschallwandler, ein Amplitudentransformationsstück und/oder eine Sonotrode auf. Das Ultraschallsystem kann in dieser bevorzugten Ausführungsform dem einer Ultraschallschweißanlage entsprechen. Mit Hilfe eines Generators wird hochfrequenter Wechselstrom erzeugt und über ein Kabel zu dem Ultraschallwandler, dem sogenannten Konverter übertragen, der daraus mit Hilfe des piezoelektrischen oder des magnetostriktiven Effekts mechanische Ultraschallfrequenz erzeugt. Diese Schwingungen werden über ein Amplitudentransformationsstück, dem sogenannten Booster, auf die Sonotrode übertragen. Booster und Sonotroden sind Werkzeuge, die durch das Einleiten von hochfrequenten mechanischen Schwingungen (Ultraschall) in Resonanzschwingungen versetzt werden. Die Booster stellen dabei das Übertragungsstück zwischen Konverter und Sonotrode dar. Sie können die Amplitude (=halbe Schwingweite) dabei verstärken (Übersetzung), gleichbleibend übertragen oder reduzieren (Untersetzung). Die Sonotroden stellen die Verbindung vom Ultraschallgenerator zum Werkstück bzw. Niet her und passen analog zum Booster die Ultraschallamplitude an die Bearbeitungsaufgabe an. Unterschiedliche Anwendungen erfordern unterschiedliche Bauformen von Boostern und/oder Sonotroden, die meist aus Stahl, Aluminium oder Titan hergestellt werden. Die Amplitude der Schwingung und die Impedanzanpassung werden durch die Form und Masse des Amplitudentransformationsstückes beeinflusst. Damit kann eine Vibrationseinrichtung bereitgestellt werden, die auf erprobten Bauteilen und Verfahren basiert.

Vorzugsweise ist der Stempel des Setzwerkzeugs die Sonotrode des Ultraschallsystems. Dadurch können Bauteile eingespart werden.

Als besonders bevorzugt hat es sich erwiesen, wenn die Schwingungen eine Schwingweite (darunter wird die Summe der Höhe der Amplitude in positiver und negativer Schwingungsrichtung verstanden) zwischen 10 µm und 110 µm (= Amplituden von 5 µm bis 55 µm) aufweisen, insbesondere bei einer Frequenz der Schwingungen zwischen 15 kHz und 40 kHz. Es handelt sich damit um einen Frequenzbereich, der typischerweise Ultraschallschwingungen entspricht.

Eine weitere vorteilhafte Ausgestaltung der erfindungsgemäßen Stanznietvorrichtung sieht vor, dass der Hub und/oder die Frequenz der Schwingungen während des Fügeprozesses verändert werden/wird. Beispielsweise kann zu Beginn des Fügeprozesses ein relativ großer Hub vorgesehen sein, der sich mit zunehmender Eindrück- bzw. Einpresstiefe des Stanzniets reduziert.

Hinsichtlich der Einkoppelrichtung derartiger (Ultraschall-)Schwingungen in den Niet bzw. die Bauteile sind unterschiedliche Variationen denkbar: In einer ersten Ausgestaltung des Verfahrens ist es vorgesehen, dass die Schwingungen, zumindest im Wesentlichen, parallel zur Fügerichtung des Niets in den Niet und/oder die wenigstens zwei Bauteile eingekoppelt werden (= longitudinales Schwingsystem). In diesem Fall werden besonders geringe Eindrück- bzw. Einpresskräfte für den Niet benötigt.

Je nach verwendeten Bauteilen bzw. Nietgeometrie kann es jedoch auch vorteilhaft sein, wenn die Schwingungen, zumindest im Wesentlichen, senkrecht zur Fügerichtung des Niets in den Niet und/oder die wenigstens zwei Bauteile eingekoppelt werden.

In alternativer Ausgestaltung kann es vorgesehen sein, dass die Schwingungen in einem schrägen Winkel zur Fügerichtung des Niets in den Niet und/oder die wenigstens zwei Bauteile eingekoppelt werden.

In nochmals alternativer Ausgestaltung kann es vorgesehen sein, dass die Schwingungen zumindest im Wesentlichen in Umfangsrichtung bzw. torsionaler Richtung des Niets in den Niet und/oder die wenigstens zwei Bauteile eingekoppelt werden (mittels Torsional-Schwingsystem).

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

Figur 1 zeigt einen größeren Ausschnitt einer Stanznietvorrichtung gemäß einer bevorzugten Ausführungsform der Erfindung mit einer Vibrationseinrichtung, wobei das Stanzwerkzeug mit dem ausgerichteten und gehaltenen Stanzniet die Fügepartner einklemmt.
Figur 2 zeigt einen Stanzniet und einen Stempel gemäß einer ersten bevorzugten Ausführungsform der Erfindung während der Ausrichtung.
Figur 3 zeigt einen Stanzniet und einen Stempel gemäß einer zweiten bevorzugten Ausführungsform der Erfindung während der Ausrichtung.
Figur 4 zeigt einen Stanzniet und einen Stempel gemäß einer dritten bevorzugten Ausführungsform der Erfindung während der Ausrichtung.

### Detaillierte Beschreibung der Zeichnung

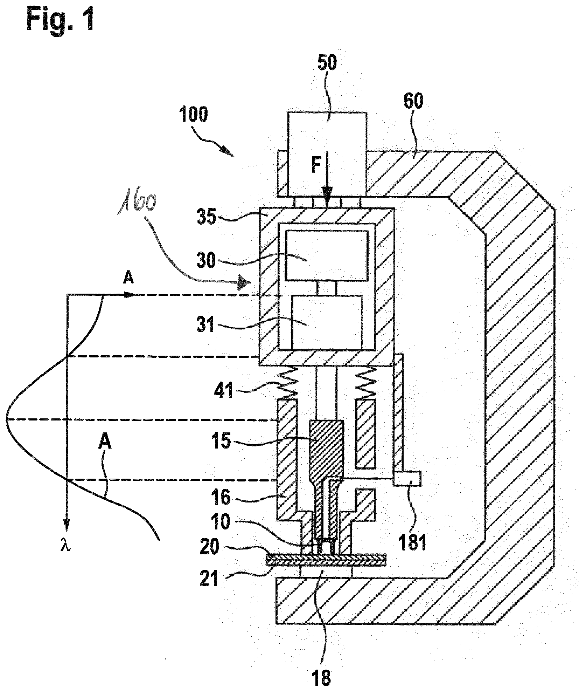

Die Erfindung wird anhand der Figuren 1 bis 2 beschrieben, wobei gleiche Elemente mit gleichen Bezugszeichen bezeichnet sind.

In Figur 1 ist ein Ausschnitt einer bevorzugten Ausführungsform einer erfindungsgemäßen Stanznietvorrichtung in einer schematischen Längsschnittsansicht dargestellt und insgesamt mit 100 bezeichnet. Die Stanznietvorrichtung 100 dient zum Verbinden zweier Bauteile 20, 21 (Fügepartner) mittels eines Stanzniets 10.

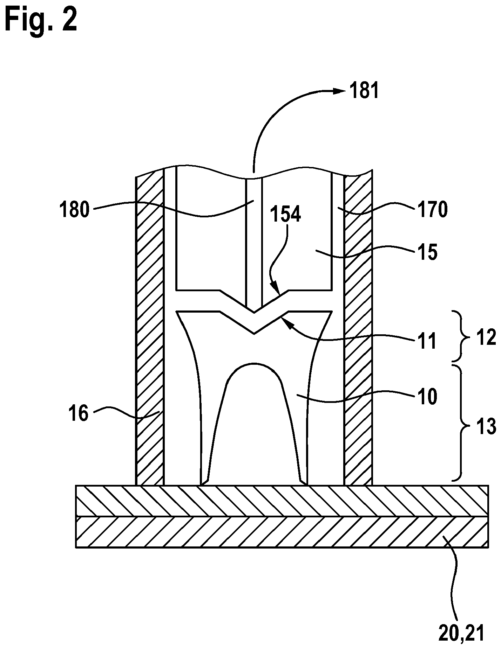

Die Stanznietvorrichtung 100 weist einen Stempel 15 auf, der beispielhaft einen runden Querschnitt aufweist. Der Stempel 15 ist von einem hülsenförmigen Niederhalter 16 radial umgeben und relativ zu diesem in Längsrichtung beweglich angeordnet. Dabei ist ein Ringspalt 170 (Figur 2) zwischen dem Niederhalter 16 und sowohl dem Stempel 15 als auch dem Stanzniet 10 ausgebildet ist, um Verschweißungen zu vermeiden. Der Niederhalter 16 kann daher insbesondere nicht mehr zur Zentrierung und Führung des Stanzniets 10 dienen.

Für diesen Zweck verfügt der Stanzniet 10, wie in den Figuren 2 bis 4 beispielsweise gezeigt, über ein nietseitiges Ausrichtmittel, das mit einem stempelseitigen Ausrichtmittel zusammenwirkt. Durch dieses Zusammenwirken wird der Stanzniet 10 relativ zum Stempel 15 zentriert und während des Stanznietvorgangs geführt. Der Stanzniet 10 ist hier als Halbhohlniet ausgebildet und weist einen Nietkopf 12, der mit dem Stempel 15 in Kontakt steht, und einen hohlzylinderförmigen Nietschaft 13, der in die Fügepartner getrieben wird, auf. Der Niet 10 besteht bevorzugt aus einem gegenüber den Werkstoffen der beiden Bauteile 20, 21 härteren Material, zumindest im Bereich des Nietschaftes 13. Lediglich der Vollständigkeit halber sei darauf hingewiesen, dass die Erfindung ebenso Vollniete betrifft.

Die Stanznietvorrichtung 100 weist einen Rahmen 60 auf, der vorzugsweise in Form eines C-Rahmens oder C-Bügels vorliegt, an welchem die einzelnen Komponenten bei einer Stanznietvorrichtung in der Regel angeordnet sind, um die gewünschte Position zueinander einnehmen zu können. Über den Rahmen 60 kann die Stanznietvorrichtung 100 bspw. an einem Arm eines Roboters o.ä. befestigt sein.

Weiterhin ist ein Antrieb 50 gezeigt, bei dem es sich bspw. um einen Spindelantrieb oder dergleichen handeln kann, der dazu geeignet ist, eine Kraft F zum Eindrücken des Niets 10 in die Bauteile 20, 21 aufzubringen. An dem Antrieb 50 ist eine Haltevorrichtung 35, bspw. in Form eines Rahmens oder eines Gestells, angebracht. An der Haltevorrichtung 35 ist ein Schwingsystem, das vorliegend einen Schwingungserzeuger 30, bspw. einen UltraschallGenerator, einen Booster 31 und einen Stempel 15 aufweist, angeordnet. Weiterhin ist gezeigt, dass der Niederhalter 16 mittels einer Federeinheit 41, bspw. in Form einer zylindrischen Schraubendruckfeder, an die Haltevorrichtung 35 und den Antrieb 50 gekoppelt ist. Dadurch kann der Niederhalter 16 gegen die Oberfläche des dem Stempel 15 zugewandten Bauteils 20 mit einer Niederhaltekraft gedrückt werden.

Auf der dem Stempel 15 und dem Niederhalter 16 gegenüberliegenden Seite der beiden Bauteile 20, 21 ist eine als Gegenhalter wirkende Matrize 18 angeordnet. Die Matrize 18 weist auf der dem Bauteil 21 zugewandten Seite eine ebene Oberseite auf, in der eine mulden- bzw. kuhlenförmige Ausnehmung ausgebildet ist. Der Stempel 15 und die Matrize 18 sind in Richtung parallel zu F, in der auch der Niederhalter 16 beweglich angeordnet ist, relativ zueinander bewegbar. Der Niederhalter 16 und die Matrize 18 dienen dazu, die beiden Bauteile 20, 21 zwischen dem Niederhalter 16 und der Matrize 18 während der Bearbeitung durch den Stempel 15 einzuspannen bzw. zusammenzudrücken.

Der Stempel 15 ist mit dem Schwingungserzeuger 30 zur Erzeugung von Schwingungen bzw. Vibrationen wirkverbunden. Insbesondere werden mittels des Schwingungserzeugers 30 Ultraschallschwingungen mit einer Schwingweite (Abstand zwischen maximaler positiver und negativer Amplitude einer Schwingung) zwischen 10 µm und 110 µm (bzw. einer Amplitude zwischen 5 µm und 55 µm) und einer Frequenz zwischen 15 kHz und 35 kHz erzeugt.

Diese Schwingungen werden von dem Schwingungserzeuger 30 über der Stempel 15 in den Niet 10 eingekoppelt. Die Einkopplungsrichtung der Vibrationen des Schwingungserzeugers 30 kann dabei bspw. parallel zur Längsachse, das heißt parallel zur Fügerichtung des Niets 10 in die Bauteile 20, 21 erfolgen

Weiterhin weist der Stempel 15 in der gezeigten Ausführungsform eine zentrale Bohrung 180 (siehe Figur 2) auf (vorzugsweise Sacklochbohrung mit 90°-Abzweig), die mittels einer Unterdruckleitung mit einer Unterdruckquelle 181 verbunden ist. Die Unterdruckquelle 181 saugt Luft durch die Bohrung 180 an, wodurch der Stanzniet 10 gegen den Stempel 15 gesaugt wird.

Weiterhin ist auf der linken Seite der Figur 1 ein Diagramm gezeigt, in dem ein Verlauf einer Schwingungsamplitude A einer sich in dem Schwingsystem ausbildenden Schwingung über der Position λ gezeigt. Daran ist zu sehen, dass der Bereich, in dem die Bohrung 180 mit der Unterdruckquelle 181 verbunden ist, eine Stelle geringer bis gar keiner Schwingungsamplitude (<25% der maximalen Längs-Amplitude A, vorzugsweise <10% der maximalen Längs-Amplitude A) ist. Insofern wirkt sich eine Schwingung in dem Stempel kaum oder gar nicht auf die Ansaugung aus, da die Schwingungsamplitude sehr dort gering oder Null ist.

Für den Stanznietvorgang werden zunächst Niederhalter 16 und Matrize 18 in Kontakt mit den Fügepartnern 20, 21 gebracht, wobei der Niederhalter 16 die Fügepartner 20, 21 gegen die Matrize 18 drückt. Der Stanzniet 10 wird mittels Unterdruck am Stempel 15 gehalten. Der anschließende Stanznietvorgang findet auf herkömmliche Weise statt, d.h. der Stanzniet 10 wird von dem mit Kraft beaufschlagten Stempel 15 in die Fügepartner 20, 21 gepresst, sodass diese verbunden werden. Während des Verpressens wird der Stanzniet 10 mit Ultraschallschwingungen beaufschlagt.

In den Figuren 2 bis 4 sind unterschiedliche bevorzugte für erfindungsgemäße Stanzniete 10, 10' und 10" und zugehörige Stempel 15, 15', 15" dargestellt.

Der Stanzniet 10, wie in Figur 2 gezeigt, verfügt über eine hier beispielsweise als Zentrierkegelvertiefung 11 ausgebildete Ausrichtausnehmung als nietseitiges Ausrichtmittel, in die eine hier beispielsweise als kongruente Zentrierkegelspitze 154 ausgebildete Ausrichterhebung des Stempels 15 als stempelseitiges Ausrichtmittel eingreift. Durch dieses Eingreifen wird der Stanzniet 10 relativ zum Stempel 15 zentriert und während des Stanznietvorgangs geführt.

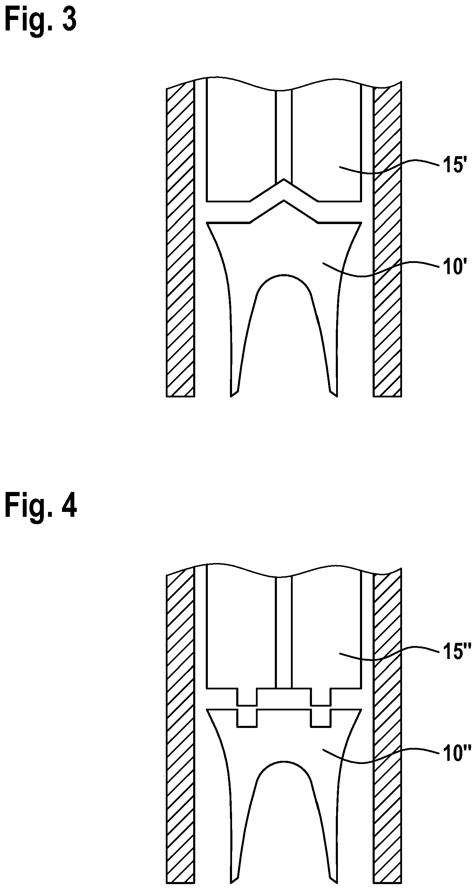

Der Stanzniet 10', wie in Figur 3 gezeigt, verfügt über eine hier beispielsweise als Zentrierkegelspitze ausgebildete Ausrichterhebung als nietseitiges Ausrichtmittel, die in eine hier beispielsweise als kongruente Zentrierkegelvertiefung ausgebildete Ausrichtausnehmung des Stempels 15 als stempelseitiges Ausrichtmittel eingreift.

Der Stanzniet 10", wie in Figur 4 gezeigt, verfügt über eine hier beispielsweise als Ringnut ausgebildete Ausrichtausnehmung als nietseitiges Ausrichtmittel, in die eine hier beispielsweise als kongruente Ringfeder ausgebildete Ausrichterhebung des Stempels 15 als stempelseitiges Ausrichtmittel eingreift.

## Patentansprüche

1. Stanznietvorrichtung (100) aufweisend
einen Stanznietstempel (15, 15', 15") zum Setzen von Stanznieten (10, 10', 10") in Fügepartner (20, 21), welcher Stanznietstempel (15, 15', 15") ein stempelseitiges Ausrichtmittel (154) zum Zusammenwirken mit einem nietseitigen Ausrichtmittel (11) eines Stanzniets (10, 10', 10") und eine zentrale Bohrung (180) aufweist,
eine Unterdruckquelle (181), wobei die zentrale Bohrung (180) des Stanznietstempels (15, 15', 15" mittels einer Unterdruckleitung mit der Unterdruckquelle (181) verbunden ist, und wobei die Unterdruckquelle (181) Luft durch die Bohrung (180) ansaugt, wodurch der Stanzniet (10, 10', 10") gegen den Stempel (15, 15', 15") gesaugt wird,
**dadurch gekennzeichnet, dass** die Stanznietvorrichtung (100) eine Vibrationseinrichtung (160) aufweist, um den Stanznietstempel (15, 15', 15") in Schwingungen zu versetzen, und
dass die Unterdruckleitung in einem Bereich, in dem eine Schwingungsamplitude kleiner als 25% einer maximalen Längs-Amplitude der Schwingung ist, mit der zentralen Bohrung (180) in dem Stempel verbunden ist.

2. Stanznietvorrichtung (100) nach Anspruch 1, wobei das stempelseitige Ausrichtmittel (154) eine Ausrichterhebung oder eine Ausrichtausnehmung ist.

3. Stanznietvorrichtung (100) nach Anspruch 1 oder 2, wobei das stempelseitige Ausrichtmittel (154) rotationssymmetrisch, achsensymmetrisch oder punktsymmetrisch ist.

4. Stanznietvorrichtung (100) nach Anspruch 1, 2 oder 3, wobei das stempelseitige Ausrichtmittel (154) kegelförmig, kegelstumpfförmig, zylinderförmig, pyramidenförmig, pyramidenstumpfförmig, kreisringförmig oder quaderförmig ist.

5. Stanznietvorrichtung (100) nach einem der vorstehenden Ansprüche, wobei die Vibrationseinrichtung (160) als Ultraschallsystem ausgebildet ist.

## Claims

1. Punch riveting apparatus (100) having
a punch riveting punch (15, 15', 15'') for setting punch rivets (10, 10', 10'') in joining partners (20, 21), said punch riveting punch (15, 15', 15'') having a punch-side alignment means (154) for cooperating with a rivet-side alignment means (11) of a punch rivet (10, 10', 10''), and a central bore (180),
a negative-pressure source (181), wherein the central bore (180) of the punch riveting punch (15, 15', 15'') is connected to the negative-pressure source (181) by means of a negative-pressure line, and wherein the negative-pressure source (181) draws in air through the bore (180), with the result that the punch rivet (10, 10', 10'') is sucked against the punch (15, 15', 15''),
**characterized in that** the punch riveting apparatus (100) has a vibration device (160) in order to set the punch riveting punch (15, 15', 15'') in vibration, and
**in that** the negative-pressure line is connected to the central bore (180) in the punch in a region in which a vibration amplitude is less than 25% of a maximum longitudinal amplitude of the vibration.

2. Punch riveting apparatus (100) according to Claim 1, wherein the punch-side alignment means (154) is an alignment protrusion or an alignment recess.

3. Punch riveting apparatus (100) according to Claim 1 or 2, wherein the punch-side alignment means (154) is rotationally symmetric, axially symmetric or point symmetric.

4. Punch riveting apparatus (100) according to Claim 1, 2 or 3, wherein the punch-side alignment means (154) is conical, frustoconical, cylindrical, pyramid-shaped, in the shape of a truncated pyramid, annular or cuboidal.

5. Punch riveting apparatus (100) according to one of the preceding claims, wherein the vibration device (160) is configured as an ultrasound system.

## Revendications

1. Dispositif de rivetage auto-perçant (100) présentant :
un poinçon de rivetage auto-perçant (15, 15', 15") pour poser des rivets auto-perçants (10, 10', 10") dans un partenaire d'assemblage (20, 21), lequel poinçon de rivetage auto-perçant (15, 15', 15") présente un moyen d'alignement du côté du poinçon (154) destiné à coopérer avec un moyen d'alignement du côté du rivet (11) d'un rivet auto-perçant (10, 10', 10") et un alésage central (180),
une source de dépression (181), l'alésage central (180) du poinçon de rivetage auto-perçant (15, 15', 15") étant connecté à la source de dépression (181) au moyen d'une conduite de dépression et la source de dépression (181) aspirant de l'air à travers l'alésage (180), de sorte que le rivet auto-perçant (10, 10', 10") soit aspiré contre le poinçon (15, 15', 15"),
**caractérisé en ce que** le dispositif de rivetage auto perçant (100) présente un dispositif vibrant (160) pour faire osciller le poinçon de rivetage auto-perçant (15, 15', 15"), et
**en ce que** la conduite de dépression, dans une région dans laquelle une amplitude d'oscillation est inférieure à 25 % d'une amplitude longitudinale maximale de l'oscillation, est raccordée à l'alésage central (180) dans le poinçon.

2. Dispositif de rivetage auto-perçant (100) selon la revendication 1, dans lequel le moyen d'alignement du côté du poinçon (154) est un rehaussement d'alignement ou un évidement d'alignement.

3. Dispositif de rivetage auto-perçant (100) selon la revendication 1 ou 2, dans lequel le moyen d'alignement du côté du poinçon (154) est réalisé avec une symétrie de révolution, une symétrie axiale ou une symétrie ponctuelle.

4. Dispositif de rivetage auto-perçant (100) selon la revendication 1, 2 ou 3, dans lequel le moyen d'alignement du côté du poinçon (154) est de forme conique, tronconique, cylindrique, pyramidale, en forme de tronc de pyramide, annulaire circulaire ou parallélépipédique.

5. Dispositif de rivetage auto-perçant (100) selon l'une quelconque des revendications précédentes, dans lequel le dispositif vibrant (160) est réalisé sous forme de système à ultrasons.
